# EUROPÄISCHE PATENTSCHRIFT

(11) **EP 0 512 461 B1**
(45) Veröffentlichungstag und Bekanntmachung des Hinweises auf die Patenterteilung: **22.11.1995**
(21) Anmeldenummer: 92107514.9
(22) Anmeldetag: 04.05.1992
(51) Int. Cl.: B27G 21/00, B27C 5/02, B23Q 11/08

(54) **Bearbeitungsmaschine für Werkstücke aus Holz, Kunststoff und dergleichen**
Machine tool for work pieces of wood, synthetic material or the like
Machine d'usinage des pièces en bois, plastique ou similaires

(30) Priorität: 08.05.1991 DE 4115062
(43) Veröffentlichungstag der Anmeldung: 11.11.1992
(73) Patentinhaber: Michael Weinig Aktiengesellschaft, D-97941 Tauberbischofsheim (DE)
(72) Erfinder: Englert, Heinrich, W-6970 Lauda (DE); Schmitt, Gerhard, W-6971 Grossrinderfeld (DE); Schubert, Henry, W-6970 Lauda (DE)
(74) Vertreter: Kohl, Karl-Heinz

(56) Entgegenhaltungen:
- EP-A- 0 436 403
- DE-U- 8 810 390
- FR-A- 2 268 609
- FR-A- 2 620 074
- FR-A- 2 620 075
- GB-A- 627 645
- GB-A- 653 866
- GB-A- 1 443 001
- US-A- 1 430 983
- HOLZ ALS ROH- UND WERKSTOFF Bd. 46, Nr. 8, August 1988, ,BERLIN, DE Seite 317 'Kompaktprofiler und Bearbeitungscenter'

## Beschreibung

Die Erfindung betrifft eine Bearbeitungsmaschine für Werkstücke aus Holz, Kunststoff und dergleichen nach dem Oberbegriff des Anspruches 1.

Bei solchen Bearbeitungsmaschinen (FR-A-2 620 074) werden die zu bearbeitenden Werkstücke von einem Eingabebereich aus auf die Transportbahn gelegt und dann mittels einer Vorschubeinrichtung durch die Maschine transportiert. Hierbei wird das Werkstück durch das entsprechende Werkzeug in der Maschine bearbeitet. Die Einführöffnung ist durch einen plattenförmigen Einlaufschutz teilweise geschlossen. Der eine vertikale Rand der Einführöffnung wird durch den Rand einer Seitenwand gebildet, die vor dem Durchführen des Werkstückes quer zur Vorschubrichtung eingestellt werden muß. Außerdem muß ein Vertikalanschlag mittels einer Kurbel eingestellt werden, gegen den der Einlaufschutz zur Freigabe der Einführöffnung hochgefahren wird.

Der Erfindung liegt die Aufgabe zugrunde, die gattungsgemäße Bearbeitungsmaschine so auszubilden, daß die beim Bearbeiten der Werkstücke unvermeidlich anfallenden Späne, Splitter und dergleichen die Bedienungsperson nicht beeinträchtigen oder gefährden können.

Diese Aufgabe wird bei der gattungsgemäßen Bearbeitungsmaschine erfindungsgemäß mit den kennzeichnenden Merkmalen des Anspruches 1 gelöst.

Bei der erfindungsgemäßen Bearbeitungsmaschine wird die Einführöffnung durch den Einlaufschutz und den Schließteil vollständig geschlossen, so daß bei der Bearbeitung des Werkstückes entstehende Späne, Splitter und dergleichen nicht durch die Einführöffnung herausgeschleudert werden können. Da das Schließteil mittels des Schlittens quer zur Vorschubrichtung der Werkstücke verstellbar ist, wird es beim Durchlauf der Werkstücke nur so weit zurückgeschoben, daß es am Werkstück anliegt. Das Schließteil läßt sich relativ zum Schlitten gegen die Federkraft verschieben. Da sie kleiner ist als die vom Antrieb erzeugte Andrückkraft des Schließteils am durchlaufenden Werkstück, ist sichergestellt, daß das Schließteil zuverlässig am Werkstück anliegt, an dem auch das schlittenseitige Element während des Werkstückdurchlaufes anliegt. Auf diese Weise ist die Einführöffnung der Bearbeitungsmaschine bis auf den Durchlaufbereich für das jeweilige Werkstück vollständig geschlossen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine Draufsicht auf eine Sicherungsvorrichtung einer erfindungsgemäßen Bearbeitungsmaschine,
- Fig. 2: eine Ansicht in Richtung des Pfeiles II in Fig. 1 auf die Sicherungsvorrichtung, wobei ein Teil der Bearbeitungsmaschine für Holz, Kunststoff und dgl. dargestellt ist,
- Fig. 3: in vergrößerter Darstellung eine Ansicht in Richtung des Pfeiles III in Fig. 1.

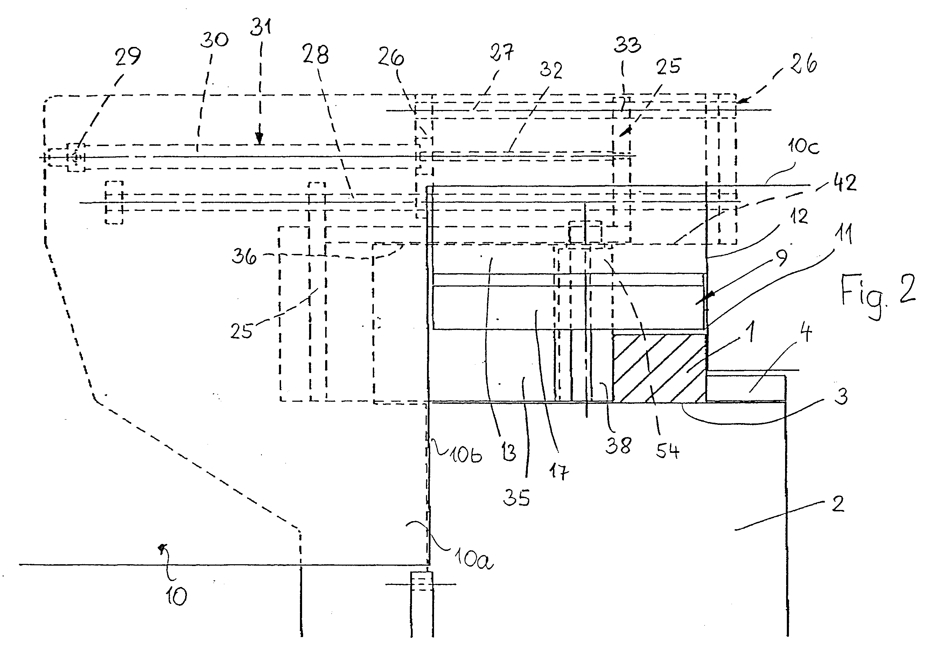

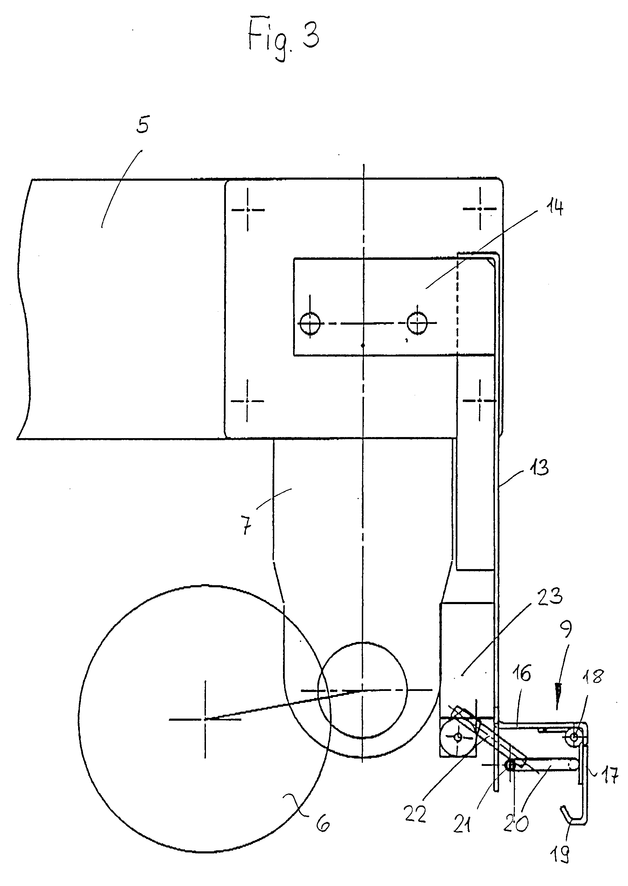

Die Sicherungsvorrichtung ist Teil einer Bearbeitungsmaschine für Holz, insbesondere Fensterhölzer, Kunststoff und dgl. Eine solche Bearbeitungsmaschine hat in bekannter Weise wenigstens eine Spindel, auf der ein entsprechendes Werkzeug, vorzugsweise ein Profilierwerkzeug, sitzt, mit dem das Werkstück 1 (Fig. 2) bearbeitet wird. Zur Bearbeitung wird das Werkstück 1, das im Ausführungsbeispiel ein Fensterholz ist, in seiner Längsrichtung durch die Maschine transportiert. Hierfür ist auf einem Maschinentisch 2 eine Transportbahn 3 vorgesehen, auf der das Werkstück 1 in seiner Längsrichtung durch die Maschine transportiert wird. Beim Transport liegt das Werkstück 1 mit seiner in Fig. 2 rechten Längsseite an einem Anschlag 4 an. Zum Transport des Werkstückes 1 ist die Maschine in bekannter Weise mit einem Vorschubbalken 5 (Fig. 3) versehen, an dem in Transportrichtung hintereinander in bekannter Weise angetriebene Vorschubrollen 6 gelagert sind. In Fig. 3 ist vom Vorschubbalken 5 lediglich das im Einlaufbereich des Werkstückes 1 liegende Ende dargestellt. In diesem Bereich ist zumindest eine Vorschubrolle 6 in Höhenrichtung schwenkbar an einem Halter 7 gelagert. Er steht vom Vorschubbalken 5 nach unten in Richtung auf die Transportbahn 3 ab. Je nach Dicke des zu bearbeitenden Werkstückes 1 wird der Vorschubbalken 5 in bekannter Weise in der Höhe so eingestellt, daß die an ihm gelagerten Vorschubrollen 6 auf dem Werkstück aufliegen und es durch die Maschine transportieren. In Fig. 2 sind der Übersichtlichkeit wegen der Vorschubbalken 5 und die Vorschubrollen 6 nicht dargestellt.

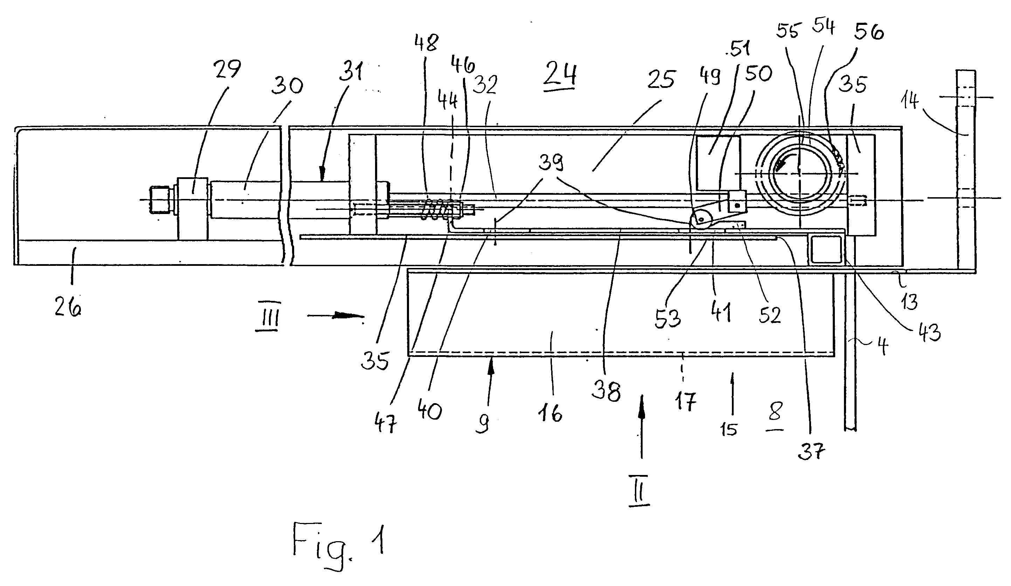

Die zu bearbeitenden Werkstücke 1 werden von einer Bedienungsperson vom Eingabebereich 8 (Fig. 1) aus in die Maschine eingegeben. Das Werkstück 1 wird hierbei an den in Vorschubrichtung des Werkstückes 1 verlaufenden Anschlag 4 angelegt, so daß es genau gegenüber der Bearbeitungsspindel mit dem darauf sitzenden Werkzeug ausgerichtet ist. In Fig. 1 ist der Übersichtlichkeit wegen die Bearbeitungsmaschine selbst nicht dargestellt, sondern lediglich eine Sicherungsvorrichtung, mit der verhindert wird, daß die Bedienungsperson beim Eingeben der zu bearbeitenden Werkstücke 1 die Hand oder die Hände zu weit in die Maschine bringt. Außerdem wird durch diese Sicherungsvorrichtung in noch zu beschreibender Weise zuverlässig verhindert, daß Späne oder Splitter, die bei der Bearbeitung des Werkstückes 1 entstehen, nach außen in den Eingabebereich 8 geschleudert werden. Außerdem wird durch die Sicherungsvorrichtung auch noch ein unbeabsichtigtes Zurückschlagen des gesamten Werkstückes 1 verhindert.

Der Einlaufbereich 8 für die zu bearbeitenden Werkstücke 1 ist durch einen Einlaufschutz 9 so verschlossen, daß der Benutzer, der die Werkstücke 1 in die Maschine eingibt, nicht versehentlich durch das Werkstück in die Maschine gezogen werden kann. Sollte dies geschehen, dann wird durch den Einlaufschutz 9 in noch zu beschreibender Weise die Maschine augenblicklich stillgesetzt.

Die (nicht dargestellte) Spindel mit dem Werkzeug sitzt in bekannter Weise unter einer Abdeckung 10 (Fig. 2), deren eine Seitenwand 10a eine entsprechende rechteckige Öffnung 11 aufweist, die eine Einführöffnung für die Werkstücke 1 bildet. Sie wird an einer Seite durch den in Fig. 2 rechten vertikalen Rand 10b und nach oben durch den oberen horizontalen Rand 10c der Seitenwand 10a begrenzt. Nach unten wird die Einführöffnung 11 durch den Maschinentisch 2 und in Fig. 2 nach rechts durch eine vertikale plattenförmige Seitenwand 12 begrenzt, die am Maschinentisch 2 befestigt sein kann. Die Einführöffnung 11 weist somit rechteckigen Umriß auf.

Die Einführöffnung 11 wird, wie Fig. 2 zeigt, über den größten Teil ihrer Höhe während des Durchlaufes der Werkstücke 1 durch die Maschine durch den Einlaufschutz abgedeckt. Er ist über eine plattenförmige Schutzwand 13 und über eine Befestigungslasche 14, die am oberen Ende der Schutzwand 13 befestigt ist, am einlaufseitigen Ende des Vorschubbalkens 5 befestigt. Dadurch wird der Einlaufschutz 9 durch den Vorschubbalken 5 mitgenommen, so daß der Einlaufschutz stets in richtiger Höhe in bezug auf die Dicke des zu bearbeitenden Werkstückes 1 angeordnet ist. Die Schutzwand 13 erstreckt sich über die Einführöffnung 11 hinaus, wie Fig. 2 zeigt. Nahe dem unteren Ende ist an der Schutzwand 13 ein senkrecht nach außen entgegen Vorschubrichtung 15 (Fig. 1) der Werkstücke 1 sich erstreckendes plattenförmiges Verbindungsteil 16 befestigt, das annähernd gleich breit ist wie die Einführöffnung 11. Am freien Ende dieses Verbindungsteiles 16 ist eine senkrecht nach unten ragende Klappe 17 angelenkt, die um eine horizontale Achse 18 (Fig. 3) schwenkbar ist. Das untere Ende 19 der Klappe 17 ist in Vorschubrichtung 15 abgebogen. Dadurch wird verhindert, daß die Klappe 17 beim Einlaufen des Werkstückes 1 in die Maschine am Werkstück hängenbleibt. An der Rückseite der Klappe 17 ist ein Hebel 20 starr befestigt, der senkrecht von der Klappe 17 absteht und sich horizontal erstreckt. Das freie Ende 21 des Hebels 20 ist rechtwinklig abgebogen bzw. trägt am freien Ende ein senkrecht zu ihm verlaufendes Auflagestück, auf dem das freie Ende eines Schwenkhebels 22 aufliegt. Er ist mit seinem anderen Ende schwenkbar an einem Endschalter 23 gelagert, der an der Rückseite der Schutzwand 13 befestigt ist.

Der Einlaufschutz 9 ist derart mit dem Vorschubalken 5 verbunden, daß er beim Einlauf der zu bearbeitenden Werkstücke 1 in die Maschine geringen Abstand vom Werkstück hat, wie Fig. 2 zeigt. In dieser Ausgangslage nimmt die Klappe 17 die in Fig. 3 dargestellte senkrechte Lage ein. Gelangt die Bedienungsperson beim Eingeben des jeweiligen Werkstückes 1 in die Maschine versehentlich in den Bereich der Klappe 17, so schwenkt diese um die horizontale Achse 18 in Vorschubrichtung 15. Dabei wird der Hebel 20, der fest mit der Klappe 17 verbunden ist, aufwärts geschwenkt. Über die Auflage 21 des Hebels 20 wird der Schwenkhebel 22 entgegen dem Uhrzeigersinn aufwärts geschwenkt. Dadurch wird der Endschalter 23 betätigt, der augenblicklich die Maschine stillsetzt. Auf diese Weise wird zuverlässig verhindert, daß die Bedienungsperson, wenn sie beispielsweise durch unvorsichtiges Arbeiten am Werkstück hängenbleibt und von diesem Werkstück in Vorschubrichtung 15 mitgezogen wird, in den Bereich des nachfolgenden Werkzeuges gelangt.

Im Einlaufbereich der Maschine ist außerdem die Sicherungsvorrichtung 24 vorgesehen, die im folgenden anhand der Fig. 1 und 2 näher erläutert werden soll. Sie hat einen Schlitten 25, der horizontal und senkrecht zur Vorschubrichtung 15 verschiebbar an der Maschine gelagert ist. Zur Lagerung des Schlittens 25 ist eine Halterung 26 vorgesehen, die an der Maschine befestigt ist. Diese Halterung 26 hat parallel zueinander und im Bereich übereinander liegende Führungsstangen 27 und 28, auf denen der Schlitten 25 horizontal verschiebbar geführt ist.

Wie Fig. 1 zeigt, trägt der Halter 26 ein Lagerstück 29, an dem ein Ende eines Zylinders 30 einer Kolben-Zylinder-Einheit 31, vorzugsweise eines Pneumatik- oder Hydraulikzylinders, befestigt ist. Das freie Ende ihrer Kolbenstange 32 ist mit dem Schlitten 25 fest verbunden. Er weist hierzu an seinem vom Zylinder 30 abgewandten Ende eine entsprechende Halterung 33 für das Kolbenstangenende auf. Am anderen Ende des Schlittens 25 ist ein Führungsstück 34 vorgesehen, durch das der Zylinder 30 ragt.

An der dem Einlaufschutz 9 zugewandten Längsseite ist am Schlitten 25 eine Schließplatte 35 befestigt, die vertikal angeordnet ist und die Einführöffnung 11 nahezu vollständig verschließt, wenn sich kein Werkstück 1 im Eingabebereich 8 befindet. Diese Schließplatte 35 ersteckt sich vom Maschinentisch 2 aus senkrecht nach oben über die Höhe des Verbindungsteiles 16 des Einlaufschutzes 9. Der obere horizontale Rand 36 der Schließplatte 35 (Fig. 2) liegt bevorzugt im oberen Drittel der Einführöffnung 11. Wie Fig. 1 zeigt, erstreckt sich die Schließplatte 35 nicht vollständig über die gesamte Breite der Einführöffnung 11. Der vom Zylinder 30 abgewandte vertikale Rand 37 der Schließplatte 35 liegt, in Vorschubrichtung 15 gesehen, mit Abstand von der Seitenwand 12, welche die Einführöffnung 11 an der in Vorschubrichtung 15 rechten Seite begrenzt. Dieser Bereich ist durch ein an der vom Einlaufschutz abgewandten Rückseite der Schließplatte 35 gelagertes plattenförmiges Schließteil 38 geschlossen, das relativ zur Schließplatte 35 horizontal verschiebbar und begrenzt kippbar ist. Von der Schließplatte 35 stehen wenigstens zwei Bolzen, Schrauben 39 oder dgl. senkrecht ab, die durch horizontal verlaufende Langlöcher 40 und 41 im Schließteil 38 ragen. In der in Fig. 1 dargestellten Schließstellung ragt das Schließteil 38 mit seinem vom Zylinder 30 abgewandten Ende über die Schließplatte 35 hinaus, wodurch die Einführöffnung 11 im Bereich unterhalb des Einlaufschutzes 9 vollständig über die gesamte Breite geschlossen wird. Das Schließteil 38 hat gleiche Höhe wie die Schließplatte 35, so daß der obere horizontale Rand 42 (Fig. 2) des Schließteiles 38 etwa auf gleicher Höhe liegt wie der obere horizontale Rand 36 der Schließplatte 35.

Das vom Zylinder 30 abgewandte Ende des Schließteils 38 ist als Auslöseglied 43 ausgebildet bzw. weist ein solches Auslöseglied 43 auf. Im dargestellten Ausführungsbeispiel wird es durch ein Vierkantrohr gebildet, das an der dem Einlaufschutz 9 zugewandten Seite des Schließteils 38 befestigt und stehend angeordnet ist. Das Schließteil 38, das parallel zur Schließplatte 35 liegt, hat geringen Abstand von ihr, so daß die noch zu beschreibende Schwenkbewegung des Schließteils 38 gegenüber der Schließplatte 35 ermöglicht wird.

Das vom Auslöseglied 43 abgewandte Ende des Schließteiles 38 ist rechtwinklig abgebogen und weist eine Durchtrittsöffnung 44 für ein Halterungsteil 45 auf. Es ist im Führungsstück 34 des Schlittens 25 befestigt und steht horizontal von ihm in Richtung auf die senkrecht von der Schutzwand 13 abstehende Befestigungslasche 14 vor. Das Halterungsteil 45 wird vorzugsweise durch eine Gewindestange gebildet, auf deren durch die Durchtrittsöffnung 44 ragendes Ende eine Mutter 46 geschraubt ist. Das Halterungsteil 45 wird im Bereich zwischen dem Führungsstück 34 und dem abgewinkelten Ende 47 des Schließteiles 38 von einer Druckfeder 48 umgeben. Sie drückt das freie Ende 47 gegen die Mutter 46.

An der von der Schließplatte 35 abgewandten Seite des Schließteils 38 liegt eine Rolle 49 eines Kontakthebels 50 eines Endschalters 51 an. Außerdem ist an dieser Rückseite des Schließteiles 38 eine Auflaufnocke 52 befestigt, die horizontal angeordnet ist und eine in Richtung auf den Zylinder 30 verlaufende Auflauffläche 53 aufweist. In der in Fig. 1 dargestellten Ausgangsstellung, in der die Schließplatte 35 und das Schließteil 38 die Einführöffnung 11 im Bereich unterhalb des Einlaufschutzes 9 abschließen, liegt die Rolle 49 unmittelbar vor der Auflauffläche 53 an der Rückseite des Schließteiles 38 an.

Der Schlitten 25 trägt außerdem eine Rücklaufsicherung 54 für das Werkstück 1. Sie wird durch eine Walze gebildet, die um eine vertikale Achse 55 drehbar auf dem Schlitten 25 gelagert ist. Die Walze 54 ist eine Freilaufwalze, die entgegen Uhrzeigersinn frei drehbar ist, im Uhrzeigersinn jedoch gegen Drehen gesperrt ist. Wie Fig. 2 zeigt, erstreckt sich die Walze 54 ebenfalls vom Maschinentisch 2 aus bis in Höhe der oberen Ränder 36 und 42 der Schließplatte 35 und des Schließteiles 38. Am Mantel ist die Walze 54 mit Zähnen 56 (Fig. 1) versehen, die über den gesamten Umfang und über die gesamte Höhe der Walze vorgesehen sind.

Solange mit der Maschine keine Werkstücke 1 bearbeitet werden, nimmt der Einlaufschutz 9 die in Fig. 3 dargestellte Lage ein. Die Sicherheitsvorrichtung 24 befindet sich hierbei in der Ausgangsstellung gemäß Fig. 1, in der der Schlitten 25 seine in Fig. 1 rechte Endstellung einnimmt. Die Schließplatte 35 und das Schließteil 38 verschließen hierbei die Einführöffnung 11 im Bereich unterhalb des Einlaufschutzes 9. Die Kolbenstange 32 ist in diesem Fall maximal ausgefahren. Sobald die Bedienungsperson ein Werkstück 1 in die Maschine eingibt und in Vorschubrichtung 15 durch die Einführöffnung 11 schiebt, gelangt die in Vorschubrichtung vordere Stirnseite des Werkstückes 1 auf das Auslöseglied 43. Es wird in Vorschubrichtung 15 nach hinten geringfügig weggeschoben, wodurch das Schließteil 38 geringfügig in bezug auf die Schließplatte 35 nach hinten geschwenkt wird. Die Durchtrittsöffnung 44 am freien Ende 47 des Schließteiles 38 ist so ausgebildet, daß dieser geringe Schwenkwinkel, der nur in der Größenordnung von beispielsweise etwa 2 bis 4° liegt, gewährleistet ist. Infolge dieses Schwenkvorganges wird der Kontakthebel 50 aus der in Fig. 1 dargestellten Ausgangslage im Uhrzeigersinn zurückgeschwenkt, wodurch der Endschalter 51 betätigt wird. Er gibt ein Signal an eine (nicht dargestellte) Steuerung für die Kolben-Zylinder-Einheit 31. Durch dieses Signal wird die Kolbenstange 32 eingefahren, wodurch der Schlitten 25 mit der Schließplatte 35, dem Schließteil 38, dem Endschalter 51 und der Walze 54 zurückgeschoben werden. Sobald das Auslöseglied 43 vom Werkstück freikommt, schwenkt das Schließteil 38 wieder in seine in Fig. 1 dargestellte Ausgangslage zurück. Der Kontakthebel 50 schwenkt dann entgegen dem Uhrzeigersinn wieder zurück, wodurch der Endschalter 51 erneut betätigt wird und ein entsprechendes Signal an die Kolben-Zylinder-Einheit 31 abgibt, die daraufhin die Kolbenstange 32 wieder ausfährt. Dadurch wird der Schlitten 25 wieder zurückbewegt, bis die Walze 54 an der in Vorschubrichtung 15 linken Längsseite des Werkstückes 1 zur Anlage kommt. Das Auslöseglied 43 kann mittels der Mutter 46 so eingestellt werden, daß es am zu bearbeitenden Werkstück 1 nicht anliegt, sondern geringem Abstand von ihn hat. Dadurch läßt sich das Werkstück behinderungsfrei durch die Maschine transportieren. Insbesondere kann dadurch sichergestellt werden, daß die Walze 54 mit ihren Zähnen 56 einwandfrei mit dem durch die Maschine laufenden Werkstück 1 in Eingriff kommt. Wird das Werkstück 1 in Vorschubrichtung 15 durch die Maschine transportiert, dann wird die Walze 54 entgegen dem Uhrzeigersinn in Fig. 1 um ihre vertikale Achse 55 gedreht.

Wie Fig. 2 zeigt, ist die Einführöffnung 11 durch den Einlaufschutz 9 nach oben und an den Seiten durch die Seitenwand 12 sowie das Schließteil 38 bis auf den Bereich des Werkstückes 1 vollständig geschlossen. Dadurch wird zuverlässig verhindert, daß während der Bearbeitung des Werkstückes 1 mit dem Werkzeug Späne oder Splitter durch die Einführöffnung 11 nach außen gelangen können.

Die Walze 54 bildet die Rücklaufsicherung für das Werkstück 1. Sie verhindert, daß das Werkstück 1 entgegen Vorschubrichtung 15 zurückgeschlagen wird. Erfährt das Werkstück 1 eine Kraft entgegen Vorschubrichtung 15, dann kann es nicht zurückgeschleudert werden, weil die Walze 54 im Uhrzeigersinn gegen Drehen gesperrt ist. Die in das Werkstück 1 eingreifenden Zähne 56 der Walze 54 verhindern dann, daß das Werkstück 1 zurückgeschlagen wird. Infolge dieser Sicherheitsvorrichtung 24 ist somit ausgeschlossen, daß das Werkstück 1 unbeabsichtigt entgegen Vorschubrichtung 15 zurückschlägt und die Bedienungsperson verletzt.

Die Walze 54 ist sicher in Eingriff mit dem durch die Maschine laufenden Werkstück 1, weil die Kolben-Zylinder-Einheit 31 ständig einen Druck auf den Schlitten 25 in Richtung auf die in Fig. 1 dargestellte Endstellung ausübt. Sobald das Werkstück 1 das Auslöseglied 43 und die Walze 54 passiert hat, wird der Schlitten 25 somit sofort in die in Fig. 1 dargestellte Endstellung vorgeschoben, in der die Einführöffnung 11 in der beschriebenen Weise wieder vollständig geschlossen wird.

Sollte die Bedienungsperson während des Durchlaufes der Werkstücke 1 durch die Maschine versehentlich mit der Hand zwischen das Werkstück 1 und das Auslöseglied 43 gelangen und dabei das Auslöseglied 43 in Fig. 1 nach links bewegen, wird dadurch das gesamte Schließteil 38 nach links in Fig. 1 bewegt. Über die schräge Auflauffläche 53 wird dabei der Kontakthebel 50 in Fig. 1 im Uhrzeigersinn in eine zweite Schaltstellung geschwenkt und der Endschalter 51 betätigt. Er gibt dann ein Signal ab, durch welches die Maschine augenblicklich stillgesetzt wird. Durch die Kraft der Druckfeder 48 wird das Schließteil 38 danach wieder augenblicklich in die in Fig.1 dargestellte Lage zurückgeschoben, in der das Schließteil mit seinem abgewinkelten Ende 47 an der Mutter 46 anliegt.

Die Maschine bietet ein Höchstmaß an Sicherheit. Da die Einführöffnung 11 beim Durchlauf der Werkstücke 1 bis auf den Durchlaufbereich des Werkstückes nach außen vollständig in der beschriebenen Weise geschlossen wird, können Späne, Splitter und dgl. während der Bearbeitung des Werkstückes 1 nicht durch die Einführöffnung 11 herausgeschleudert werden, welche die Bedienungsperson verletzen könnten. Sollte die Bedienungsperson versehentlich mit ihrer Hand durch die Einführöffnung 11 greifen oder beispielsweise am Werkstück 1 hängenbleiben und dadurch in Richtung auf die Einführöffnung 11 gezogen werden, wird durch die Klappe 17 des Einlaufschutzes 9 die Maschine in der beschriebenen Weise augenblicklich stillgesetzt. In gleicher Weise wird durch das Auslöseglied 43 sichergestellt, daß die Maschine sofort stillgesetzt wird, wenn die Bedienungsperson während des Bearbeitens versehentlich ihre Hand zwischen Werkstück 1 und Auslöseglied 43 bringt.

## Patentansprüche

1. Bearbeitungsmaschine für Werkstücke (1) aus Holz, Kunststoff und dergleichen, mit mindestens einer ein Werkzeug tragenden Spindel, mit wenigstens einer Transportbahn (3), auf der die zu bearbeitenden Werkstücke (1) längs des Werkzeuges transportierbar sind, die von einem Eingabebereich (8) aus in die Maschine eingebbar sind, der eine Einführöffnung (11) aufweist, die teilweise durch einen Einlaufschutz (9) verschließbar und an einer Seite durch den aufwärts verlaufenden Rand (10b) einer Seitenwand (10a) begrenzt ist,
dadurch gekennzeichnet, daß die Einführöffnung (11) zusätzlich zum Einlaufschutz (9) durch mindestens ein Schließteil (38) vollständig verschließbar ist, das zusätzlich zur Seitenwand (10a) vorgesehen und das auf einem quer zur Vorschubrichtung (15) der Werkstücke (1) verstellbaren Schlitten (25) angeordnet ist, der mit einem Antrieb (31) verschiebbar ist, daß das Schließteil (38) gegen Federkraft relativ zum Schlitten (25) verschiebbar ist, und daß die Federkraft kleiner ist als die vom Antrieb (31) erzeugte Andrückkraft des Schließteils (38) am durchlaufenden Werkstück (1), das von einem schlittenseitigen Element (54) während seines Durchlaufes berührt wird.

2. Maschine nach Anspruch 1,
dadurch gekennzeichnet, daß sich das vorzugsweise als hochkant stehende Platte ausgebildete Schließteil (38) bis in den Bereich unterhalb des Einlaufschutzes (9) bis in Höhe der Transportbahn (3) erstreckt.

3. Maschine nach Anspruch 1 oder 2,
dadurch gekennzeichnet, daß der Schlitten (25) auf einem Maschinentisch (2) angeordnet ist.

4. Maschine nach einem der Ansprüche 1 bis 3,
dadurch gekennzeichnet, daß der Antrieb (31) für den Schlitten (25) mindestens eine Kolben-Zylinder-Einheit ist.

5. Maschine nach einem der Ansprüche 1 bis 4,
dadurch gekennzeichnet, daß das Schließteil (38) an einer Schließplatte (35) geführt ist, die am Schlitten (25) angeordnet ist.

6. Maschine nach Anspruch 5,
dadurch gekennzeichnet, daß die vorzugsweise gleiche Höhe wie das Schließteil (38) aufweisende Schließplatte (35) zusammen mit dem Schließteil (38) die Einführöffnung (11) vollständig verschließt, und daß im Einführweg der Werkstücke (1) wenigstens ein vorzugsweise mit dem Schließteil (38) verbundenes Auslöseglied (43) liegt, über das eine Steuerung der Kolben-Zylinder-Einheit (31) betätigbar ist.

7. Maschine nach Anspruch 6,
dadurch gekennzeichnet, daß das Schließteil (38) über das Auslöseglied (43) in eine erste Schaltstellung verstellbar ist, in der das Schließteil (38) einen Schalter (51) betätigt, und daß vorzugsweise der Schalter (51) einen schwenkbaren Kontakthebel aufweist, der vorzugsweise mit einer Rolle (49) am Schließteil (38) anliegt.

8. Maschine nach Anspruch 7,
dadurch gekennzeichnet, daß der Kontakthebel (50) zwei Schaltstellungen aufweist, wobei in der einen Schaltstellung der Schalter (51) ein Signal zur Betätigung der Kolben-Zylinder-Einheit (31) und in der anderen Schaltstellung ein Signal zum Stillsetzen der Maschine abgibt, und daß vorzugsweise in der einen Schaltstellung des Kontakthebels (50) das Schließteil (38) seine erste Schaltstellung einnimmt.

9. Maschine nach Anspruch 8,
dadurch gekennzeichnet, daß das Auslöseglied (43) quer zur Vorschubrichtung (15) der Werkstücke (1) verstellbar ist, wodurch der Kontakthebel (50) in seine andere Schaltstellung gelangt, und daß vorzugsweise das Schließteil (38) ein Betätigungselement (52), vorzugsweise einen Auflaufnocken, aufweist, durch den der Kontakthebel (50) in seine andere Schaltstellung gelangt.

10. Maschine nach einem der Ansprüche 5 bis 9,
dadurch gekennzeichnet, daß die Schließplatte (35), das Schließteil (38) und der Schlitten (25) Teil einer Sicherheitsvorrichtung (24) sind, die in Vorschubrichtung (15) der Werkstücke (1) hinter dem Einlaufschutz (9) angeordnet ist.

11. Maschine, insbesondere nach einem der Ansprüche 1 bis 10,
dadurch gekennzeichnet, daß das schlittenseitige Element (54) eine Rücklaufsicherung für das zu bearbeitende Werkstück (1) ist, die vorzugsweise eine einen Freilauf aufweisende Walze ist, die um eine vertikale Achse (55) drehbar ist.

12. Maschine nach Anspruch 11,
dadurch gekennzeichnet, daß die Walze (54) Eingriffselemente (56), vorzugsweise Zähne, hat, mit denen die Walze (54) beim Vorschub der Werkstücke (1) durch die Maschine in Eingriff mit dem Werkstück (1) ist, und daß vorzugsweise die Walze (54) in der Richtung gegen Drehen gesperrt ist, in der sich das Werkstück (1) entgegen Vorschubrichtung (15) bewegt, und vorzugsweise in Vorschubrichtung (15) der Werkstücke (1) hinter dem Auslöseglied (43) liegt.

## Claims

1. A machining machine for workpieces (1) which are made of wood, a synthetic material and the like, having at least one spindle bearing a tool, having at least one conveyor belt (3) on which the workpieces (1) to be machined can be conveyed alongside the tool, which workpieces (1) can be fed into the machine at a feeding region (8) with an inlet (11) which can be partially closed by means of an inlet guard (9) and which is bounded at one side by the upwards-extending edge (10b) of a lateral wall (10a), characterised in that in addition to the inlet guard (9), the inlet (11) is completely closeable by means of at least one closing part (38) provided in addition to the lateral wall (10a) and arranged on a slide (25) movable transversely to the feed direction (15) of the workpieces (1), which slide (25) is displaceable by means of a drive (31), in that the closing part (38) can be displaced relative to the slide (25) against spring tension, and in that the spring tension is less than the pressing force - generated by the drive (31) - of the closing part (38) against the workpiece (1) passing through, an element (54) located at the side nearest the slide making contact with this workpiece (1) during its passage.

2. A machine in accordance with Claim 1, characterised in that the closing part (38), which is preferably in the form of an upright plate, extends to the region below the inlet guard (9) and to the level of the conveyor belt (3).

3. A machine in accordance with Claim 1 or 2, characterised in that the slide (25) is arranged on a machine table (2).

4. A machine in accordance with any one of Claims 1 to 3, characterised in that the drive (31) for the slide (25) is at least one piston - cylinder unit.

5. A machine in accordance with any one of Claims 1 to 4, characterised in that the closing part (38) is guided on a closing plate (35) arranged on the slide (25).

6. A machine in accordance with Claim 5, characterised in that closing plate (35), which is preferably the same height as the closing part (38), together with the closing part (38) completely closes the inlet (11), and in that in the feed path of the workpieces (1) there lies at least one triggering part (43) which is preferably connected to the closing part (38) and by means of which a control device for the piston - cylinder unit (31) can be actuated.

7. A machine in accordance with Claim 6, characterised in that the closing part (38) can, via the triggering part (43), be moved into a first switching position in which the closing part (38) actuates a switch (51), and in that the switch (51) preferably has a pivotable contact lever which preferably contacts with the closing part (38) by means of a roller (49).

8. A machine in accordance with Claim 7, characterised in that the contact lever (50) has two switching positions, in one switching position the switch (51) emitting a signal to actuate the piston - cylinder unit (31) and in the other switching position the switch (51) emitting a signal to stop the machine, and in that in one switching position of the contact lever (50), the closing part (38) preferably assumes its first switching position.

9. A machine in accordance with Claim 8, characterised in that the triggering part (43) is movable transversely to the feed direction (15) of the work pieces (1), whereby the contact lever (50) gets into its other switching position, and in that the closing part (38) preferably has an actuating element (52), preferably a stopping cam, by means of which the contact lever (50) gets into its other switching position.

10. A machine in accordance with any one of Claims 5 to 9, characterised in that the closing plate (35), the closing part (38) and the slide (25) are part of a safety device (24) which is, in the feed direction (15) of the workpieces (1), arranged after the inlet guard (9).

11. A machine, in particular in accordance with any one of Claims 1 to 10, characterised in that the element (54), located at the side nearest the slide, is a return stop for the workpiece (1) to be machined, this return stop preferably being a roll which has a free-wheel and is rotatable about a vertical axis (55).

12. A machine in accordance with Claim 11, characterised in that the roll (54) has engaging elements (56), preferably teeth, by means of which the roll (54) engages with the workpiece (1) during feeding of the workpieces (1) through the machine, and in that the roll (54) is preferably blocked against rotation in the direction in which the workpiece (1) moves against the feed direction (15), and - in the feed direction (15) of the workpieces (1) - the roll (54) preferably lies after the triggering part (43).

## Revendications

1. Machine d'usinage pour des pièces (1) en bois, en matière plastique ou similaires, comportant au moins une broche qui porte un outil, au moins une voie de transport (3), sur laquelle on peut transporter le long de l'outil les pièces à usiner (1) qui peuvent être introduites depuis une région d'introduction (8) dans la machine, qui présente une ouverture d'introduction (11) susceptible d'être partiellement refermée par une protection d'admission (9) et qui est délimitée sur un côté par la bordure (10b) s'étendant vers le haut d'une paroi latérale (10a),
caractérisée en ce que l'ouverture d'introduction (11) peut être entièrement refermée en supplément à la protection d'admission (9) par au moins un élément de fermeture (38), qui est prévu en supplément à la paroi latérale (10a) et qui est agencé sur un chariot (25) réglable transversalement à la direction d'avance (15) des pièces d'usinage (1), susceptible d'être déplacé au moyen d'un entraînement (31), en ce que l'élément de fermeture (38) est mobile à l'encontre d'une force de ressort par rapport au chariot (25), et en ce que la force de ressort est inférieure à la force d'appui de l'élément de fermeture (38), qui est produite par l'entraînement (31) sur la pièce à usiner (1) en cours de passage, qui est touchée par un élément (54) du côté chariot pendant son passage.

2. Machine selon la revendication 1,
caractérisée en ce que l'élément de fermeture (38) réalisé de préférence sous la forme d'une plaque agencée debout s'étend jusque dans la région au-dessous de la protection d'admission (9) jusqu'à la hauteur de la voie de transport (3).

3. Machine selon l'une ou l'autre des revendications 1 et 2,
caractérisée en ce que le chariot (25) est agencé sur une table (2) de la machine.

4. Machine selon l'une quelconque des revendications 1 à 3,
caractérisée en ce que l'entraînement (31) pour le chariot (25) est au moins une unité à piston-et-cylindre.

5. Machine selon l'une quelconque des revendications 1 à 4,
caractérisée en ce que l'élément de fermeture (38) est guidé sur une plaque de fermeture (35) qui est agencée sur le chariot (25).

6. Machine selon la revendication 5,
caractérisée en ce que la plaque de fermeture (35), présentant de préférence la même hauteur que l'élément de fermeture (38), referme conjointement avec l'élément de fermeture (38) entièrement l'ouverture d'introduction (11), et en ce qu'il existe sur le trajet d'introduction des pièces d'usinage (1) au moins un élément de déclenchement (43) relié de préférence à l'élément de fermeture (38), via lequel peut être actionnée une commande de l'unité à piston-et-cylindre (31).

7. Machine selon la revendication 6,
caractérisée en ce que l'élément de fermeture (38) peut être amené via l'élément de déclenchement (43) dans une première position de passage, dans laquelle l'élément de fermeture (38) actionne un interrupteur (51), et en ce que l'interrupteur (51) présente de préférence un levier de contact basculant, qui s'appuie de préférence par un galet (49) contre l'élément de fermeture (38).

8. Machine selon la revendication 7,
caractérisée en ce que le levier de contact (50) présente deux positions de passage, et dans l'une des positions de passage, l'interrupteur (51) envoie un signal pour l'actionnement de l'unité à piston-et-cylindre (31), et dans l'autre position de passage un signal pour la mise à l'arrêt de la machine, et en ce que dans l'une des positions de passage du levier de contact (50), l'élément de fermeture (38) occupe de préférence sa première position de passage.

9. Machine selon la revendication 8,
caractérisée en ce que l'élément de déclenchement (43) est réglable transversalement à la direction d'avance (15) des pièces d'usinage (1), suite à quoi le levier de contact (50) parvient dans son autre position de passage, et en ce que l'élément de fermeture (38) présente de préférence un élément d'actionnement (52), de préférence une came de montée, par l'intermédiaire de laquelle le levier de contact (50) parvient dans son autre position de passage.

10. Machine selon l'une quelconque des revendications 5 à 9,
caractérisée en ce que la plaque de fermeture (35), l'élément de fermeture (38), et le chariot (25) font partie d'un dispositif de sécurité (24) qui est agencé derrière la protection d'admission (9), vu en direction d'avance (15) des pièces d'usinage (1).

11. Machine, en particulier selon l'une quelconque des revendications 1 à 10,
caractérisée en ce que l'élément (54) du côté chariot est un blocage anti-retour pour la pièce à usiner (1), qui est de préférence un rouleau présentant un système à roue libre, qui est en rotation autour d'un axe vertical (55).

12. Machine selon la revendication 11,
caractérisée en ce que le rouleau (54) possède des éléments d'engrènement (56), de préférence des dents, avec lesquels le rouleau (54) est en engrènement avec la pièce à usiner (1), lors de l'avance des pièces d'usinage (1) à travers la machine, et en ce que le rouleau (54) est de préférence bloqué à l'encontre d'une rotation dans la direction dans laquelle la pièce à usiner (1) se déplace en sens opposé à la direction d'avance (15), et se trouve de préférence derrière l'élément de déclenchement (43), vu en direction d'avance (15) des pièces d'usinage (1).
